# EUROPÄISCHE PATENTSCHRIFT

(11) **EP 4 134 580 B1**
(45) Veröffentlichungstag und Bekanntmachung des Hinweises auf die Patenterteilung: **12.06.2024**
(21) Anmeldenummer: 22184404.6
(22) Anmeldetag: 12.07.2022
(51) Int. Cl.: F16L 55/11, D06F 39/02, F16K 15/14, F16L 27/087, F16L 27/12

(54) **VENTILFUNKTIONSGRUPPE FÜR EIN FLÜSSIGKEITSFÜHRENDES SYSTEM UND FLÜSSIGKEITSFÜHRENDES SYSTEM MIT EINEM HAUSHALTSGERÄT UND EINEM FLÜSSIGKEITSTANK**
VALVE FUNCTION GROUP FOR A LIQUID-CONDUCTING SYSTEM AND LIQUID-CONDUCTING SYSTEM COMPRISING A HOUSEHOLD APPLIANCE AND A LIQUID TANK
GROUPE FONCTIONNEL DE SOUPAPE POUR UN SYSTÈME GUIDANT DU LIQUIDE ET SYSTÈME GUIDANT DU LIQUIDE DOTÉ D'UN TEL APPAREIL ÉLECTROMÉNAGER ET D'UN RÉSERVOIR DE LIQUIDE

(30) Priorität: 09.08.2021 DE 102021120587
(43) Veröffentlichungstag der Anmeldung: 15.02.2023
(73) Patentinhaber: Miele & Cie. KG, 33332 Gütersloh (DE)
(72) Erfinder: Lütkebohle, Phillip, 33415 Verl (DE); Wilpert, Markus, 33330 Gütersloh (DE); Finke, Michael, 33161 Hövelhof (DE); Hollenhorst, Matthias, 59556 Lippstadt (DE)

(56) Entgegenhaltungen:
- WO-A1-2021/083678
- ES-T3- 2 528 342
- KR-A- 20090 101 679
- NO-B1- 325 331
- US-A1- 2020 325 617

## Beschreibung

Die Erfindung betrifft eine Ventilfunktionsgruppe für ein flüssigkeitsführendes System und ein flüssigkeitsführendes System mit einem Haushaltsgerät und einem Flüssigkeitstank.

Derartige Ventilfunktionsgruppen für flüssigkeitsführende Systeme und flüssigkeitsführende Systeme mit einem Haushaltsgerät und einem Flüssigkeitstank sind aus dem Stand der Technik in einer Vielzahl von Ausführungsformen bereits bekannt. Zum einen dienen diese Ventilfunktionsgruppen dazu, den Flüssigkeitstank immer dann abzudichten, wenn der Flüssigkeitstank nicht mit dem Haushaltsgerät strömungsleitend verbunden ist. Zum anderen erfüllen die Ventilfunktionsgruppen den Zweck, den Flüssigkeitstank mit dem Haushaltsgerät strömungsleitend verbinden zu können.

Beispiele bekannter Ventilfunktionsgruppen finden sich in der US 2020/325617 A1 und in der WO 2021/083678 A1.

Der Erfindung stellt sich somit das Problem, eine Ventilfunktionsgruppe für ein flüssigkeitsführendes System und ein flüssigkeitsführendes System mit einem Haushaltsgerät und einem Flüssigkeitstank zu verbessern.

Erfindungsgemäß wird dieses Problem durch eine Ventilfunktionsgruppe mit den Merkmalen des Patentanspruchs 1 gelöst, wonach die Ventilfunktionsgruppe eine Kupplungsbuchse zur strömungsleitenden Verbindung der Ventilfunktionsgruppe mit dem Flüssigkeitstank und einen in einer Einstecklage in eine Stutzenaufnahme der Kupplungsbuchse strömungsleitend eingesteckten Kupplungsstutzen zur strömungsleitenden Verbindung der Ventilfunktionsgruppe mit dem Haushaltsgerät umfasst, wobei die Kupplungsbuchse eine zwischen einer einen den Flüssigkeitstank mit der Stutzenaufnahme strömungsleitend verbindenden Strömungsweg blockierenden Schließlage und einer den Strömungsweg öffnenden Öffnungslage hin und her überführbare Buchsendichtung aufweist und der Strömungsweg lediglich mittels einer elastischen Verformung der Buchsendichtung in deren Schließlage blockierbar und in deren Öffnungslage öffenbar ist. Es sind hierfür keine weiteren Bauteile der Ventilfunktionsgruppe zwingend erforderlich. Ferner wird dieses Problem durch ein flüssigkeitsführendes System mit den Merkmalen des Patentanspruchs 11 gelöst. Bei dem Haushaltsgerät kann es sich beispielsweise um eine Waschmaschine für Textilien handeln. Jedoch sind auch andere Arten von Waschmaschinen und allgemein andere wasserführende Haushaltsgeräte denkbar. Darüber hinaus kann das flüssigkeitsführende System anstelle des Haushaltsgeräts auch ein gewerbliches Gerät, also ein Gerät für den professionellen Einsatz, aufweisen. Vorteilhafte Ausgestaltungen und Weiterbildungen der Erfindung ergeben sich aus den nachfolgenden Unteransprüchen.

Der mit der Erfindung erreichbare Vorteil besteht insbesondere darin, dass eine Ventilfunktionsgruppe für ein flüssigkeitsführendes System mit einem Haushaltsgerät und einem Flüssigkeitstank verbessert ist. Aufgrund der erfindungsgemäßen Ausbildung der Ventilfunktionsgruppe ist es zum einen möglich, die konstruktive Komplexität der Ventilfunktionsgruppe wesentlich zu reduzieren. Entsprechend vereinfacht sich zum einen die Fertigung der Ventilfunktionsgruppe. Zum anderen ist dadurch auch die Anzahl der Bauteile verringert, so dass sich auch Logistik und Lagerhaltung vereinfachen. Alles in allem ist die erfindungsgemäße Ventilfunktionsgruppe wesentlich kostengünstiger und gewichtsreduziert herstellbar. Ferner ist die erfindungsgemäße Ventilfunktionsgruppe auch mit einer geringeren Anzahl von voneinander verschiedenen Materialien realisierbar. Entsprechend ist die Recyclingfähigkeit der Ventilfunktionsgruppe wesentlich verbessert.

Grundsätzlich ist die erfindungsgemäße Ventilfunktionsgruppe nach Art, Funktionsweise, Material und Dimensionierung in weiten geeigneten Grenzen frei wählbar. Siehe hierzu beispielsweise die diesbezüglichen Ausführungen in der Beschreibungseinleitung.

Eine vorteilhafte Weiterbildung der erfindungsgemäßen Ventilfunktionsgruppe sieht vor, dass die Buchsendichtung derart ausgebildet ist, dass die Buchsendichtung mittels einer mechanischen Krafteinwirkung des Kupplungsstutzens auf die Buchsendichtung bei dessen Überführung in dessen Einstecklage, bevorzugt lediglich mittels der vorgenannten Krafteinwirkung, von deren Schließlage in deren Öffnungslage überführbar ist. Auf diese Weise ist die erfindungsgemäße Ventilfunktionsgruppe auf konstruktiv und fertigungstechnisch einfache Art sowie auf robuste Weise realisierbar. Dies gilt insbesondere für die bevorzugte Ausführungsform dieser Weiterbildung.

Eine vorteilhafte Weiterbildung der vorgenannten Weiterbildung der erfindungsgemäßen Ventilfunktionsgruppe sieht vor, dass die Buchsendichtung einen Betätigungsvorsprung aufweist, wobei der Betätigungsvorsprung derart ausgebildet ist, dass die Buchsendichtung bei der Überführung des Kupplungsstutzens in dessen Einstecklage mittels des Betätigungsvorsprungs, bevorzugt lediglich mittels des Betätigungsvorsprungs, elastisch verformbar ist. Hierdurch ist zum einen die Krafteinwirkung des Kupplungsstutzens auf die Buchsendichtung bei der Überführung des Kupplungsstutzens in dessen Einstecklage steigerbar. Beispielsweise kann je nach der gewünschten Krafteinwirkung der Betätigungsvorsprung entsprechend weit aus einem Rest der Buchsendichtung hervorstehen. Zum anderen ist es mittels des Betätigungsvorsprungs möglich, den Kupplungsstutzen gezielt auf die Buchsendichtung einwirken zu lassen, so dass die Krafteinwirkung auf die Buchsendichtung sehr definiert ist. Die vorgenannten Vorteile gelten insbesondere für die bevorzugte Ausführungsform dieser Weiterbildung. Ferner hat die bevorzugte Ausführungsform den weiteren Vorteil, dass zusätzliche Krafteinwirkungen, beispielsweise das Anlegen eines Unterdrucks an die Buchsendichtung, entbehrlich sind.

Grundsätzlich ist die Buchsendichtung nach Art, Funktionsweise, Material und Dimensionierung in weiten geeigneten Grenzen frei wählbar. Eine weitere vorteilhafte Weiterbildung der erfindungsgemäßen Ventilfunktionsgruppe sieht vor, dass die Buchsendichtung als ein Squeeze-Element mit mindestens einem Schlitz ausgebildet ist. Squeeze-Elemente sind in einer Vielzahl von Ausführungsformen auf dem Markt erhältlich und sind somit für verschiedenste Anwendungsfälle einsetzbar.

Eine andere vorteilhafte Weiterbildung der erfindungsgemäßen Ventilfunktionsgruppe sieht vor, dass die Buchsendichtung derart ausgebildet ist, dass die Buchsendichtung in deren Schließlage mit einem Dichtvorsprung in eine Strömungswegöffnung der Kupplungsbuchse dichtend eingreift, bevorzugt, dass der Dichtvorsprung bei der Überführung der Buchsendichtung in deren Öffnungslage zumindest teilweise von der Strömungswegöffnung strömungsleitend abhebbar ist. Auf diese Weise ist die Dichtwirkung der Buchsendichtung wesentlich verbessert. Darüber hinaus hat die bevorzugte Ausführungsform dieser Weiterbildung den weiteren Vorteil, dass die Buchsendichtung ohne zusätzliche konstruktive Anpassungen der Buchsendichtung, beispielsweise ohne mittels Unterdruck strömungsleitend öffenbare Schlitze, in deren Öffnungslage überführbar ist.

Eine weitere vorteilhafte Weiterbildung der erfindungsgemäßen Ventilfunktionsgruppe sieht vor, dass die Buchsendichtung an deren Randbereich einen umlaufenden Verbindungsabschnitt oder mindestens zwei einander diametral gegenüberliegend angeordnete Verbindungsabschnitte aufweist, wobei die Buchsendichtung mittels des mindestens einen Verbindungsabschnitts mit der Kupplungsbuchse kraftübertragend verbunden ist. Hierdurch ist die Buchsendichtung auf konstruktiv und fertigungstechnisch besonders einfache Art und Weise mit der Kupplungsbuchse verbindbar.

Die erfindungsgemäße Ventilfunktionsgruppe sieht vor, dass die Buchsendichtung derart ausgebildet ist, dass die Buchsendichtung in der Einstecklage mittels eines an der Buchsendichtung anliegenden Unterdrucks, bevorzugt lediglich mittels eines Unterdrucks, von deren Schließlage in deren Öffnungslage und/oder von deren Öffnungslage in deren Schließlage überführbar ist. Auf diese Weise ist es möglich, dass die Buchsendichtung erst im tatsächlichen Bedarfsfall von deren Schließlage in deren Öffnungslage überführbar ist. Entsprechend dient das Einstecken des Kupplungsstutzens in die Steckaufnahme der Kupplungsbuchse, beispielsweise ein Aufstecken des Flüssigkeitstanks mit der Kupplungsbuchse auf den Kupplungsstutzen des Haushaltsgeräts, hier lediglich der Vorbereitung der eigentlichen strömungsleitenden Verbindung zwischen dem Flüssigkeitstank auf der einen Seite und dem Haushaltsgerät auf der anderen Seite. Erst durch das Anlegen des Unterdrucks wird die Buchsendichtung von deren Schließlage in deren Öffnungslage überführt und damit der Strömungsweg zwischen dem Flüssigkeitstank und der Stutzenaufnahme geöffnet.

Eine vorteilhafte Weiterbildung der vorgenannten Ausführungsform der erfindungsgemäßen Ventilfunktionsgruppe sieht vor, dass zwei umlaufende Stutzendichtungen derart auf die Stutzenaufnahme angepasst ausgebildet und an dem Kupplungsstutzen angeordnet sind, dass mittels des Kupplungsstutzens in dessen Einstecklage in der Stutzenaufnahme ein Unterdruck derart aufbaubar ist, dass mittels dieses Unterdrucks die Buchsendichtung in deren Öffnungslage überführbar ist. Hierdurch ist es auf konstruktiv und fertigungstechnisch einfache Art und Weise möglich, mittels des Kupplungsstutzens an der Buchsendichtung genügend Unterdruck für deren Überführung in deren Öffnungslage aufzubauen.

Eine andere vorteilhafte Weiterbildung der erfindungsgemäßen Ventilfunktionsgruppe sieht vor, dass an dem Kupplungsstutzen zwei umlaufende Stutzendichtungen zur Abdichtung der Stutzenaufnahme in einem Bereich zwischen den beiden Stutzendichtungen bei in dessen Einstecklage befindlichem Kupplungsstutzen und an der Kupplungsbuchse zwei umlaufende Belüftungsnuten angeordnet sind, wobei die Stutzendichtungen und die Belüftungsnuten derart zueinander korrespondierend ausgebildet und angeordnet sind, dass ein zwischen der Kupplungsbuchse und dem Kupplungsstutzen wirkender Unterdruck bei der Überführung des Kupplungsstutzens in eine Nicht-Einstecklage des Kupplungsstutzens, in der der Kupplungsstutzen in die Stutzenaufnahme nicht eingesteckt ist, abbaubar ist. Auf diese Weise ist es auf konstruktiv und fertigungstechnisch besonders einfache Art möglich, einen bei der Überführung des Kupplungsstutzens von dessen Einstecklage in dessen Nicht-Einstecklage unerwünschten Unterdruck zwischen dem Kupplungsstutzen und der Kupplungsbuchse zu brechen. Zum einen würde der Unterdruck die Überführung des Kupplungsstutzens in dessen Nicht-Einstecklage für einen Benutzer erschweren. Zum anderen könnte der Unterdruck die Buchsendichtung von deren Schließlage in deren Öffnungslage überführen, so dass Flüssigkeit in ungewünschter Weise aus dem Flüssigkeitstank austreten könnte.

Ferner sieht eine vorteilhafte Weiterbildung der erfindungsgemäßen Ventilfunktionsgruppe vor, dass die Ventilfunktionsgruppe zusätzlich einen Transportstutzen umfasst, wobei der Transportstutzen derart auf die Stutzenaufnahme der Kupplungsbuchse mit der daran angeordneten Buchsendichtung angepasst ausgebildet ist, dass die Buchsendichtung bei in die Stutzenaufnahme eingesteckten Transportstutzen in deren Schließlage sicherbar ist. Hierdurch ist die Buchsendichtung auf robuste Art und Weise in deren Schließlage sicherbar. Gerade bei dem Transport des Flüssigkeitstanks ist dies wesentlich.

Grundsätzlich ist das erfindungsgemäße flüssigkeitsführende System nach Art, Funktionsweise, Material und Dimensionierung in weiten geeigneten Grenzen frei wählbar. Siehe hierzu beispielsweise die diesbezüglichen Ausführungen in der Beschreibungseinleitung. Vorteilhafterweise ist es vorgesehen, dass der Kupplungsstutzen als ein integraler Bestandteil des Haushaltsgeräts und die Kupplungsbuchse als ein integraler Bestandteil des Flüssigkeitstanks ausgebildet sind. Auf diese Weise ist die Komplexität des erfindungsgemäßen flüssigkeitsführenden Systems wesentlich reduziert. Entsprechend vereinfacht sich die Handhabung für einen Benutzer des erfindungsgemäßen flüssigkeitsführenden Systems. Der Bedienkomfort für den Benutzer ist verbessert.

Drei Ausführungsbeispiele der Erfindung sind in den Zeichnungen rein schematisch dargestellt und werden nachfolgend näher beschrieben. Es zeigt
- Figur 1: ein erstes Ausführungsbeispiel des erfindungsgemäßen flüssigkeitsführenden Systems mit der erfindungsgemäßen Ventilfunktionsgruppe in einer teilweisen, geschnittenen Seitenansicht,
- Figur 2: die Buchsendichtung des ersten Ausführungsbeispiels in einer perspektivischen Einzeldarstellung,
- Figur 3: das erste Ausführungsbeispiel in einer teilweisen, vergrößerten, geschnittenen Seitenansicht im Bereich der Belüftungsnuten,
- Figur 4: das erste Ausführungsbeispiel in einer zu der Fig. 1 analogen Darstellung, mit dem in die Stutzenaufnahme eingesteckten Transportstutzen,
- Figur 5: ein zweites Ausführungsbeispiel des erfindungsgemäßen flüssigkeitsführenden Systems mit der erfindungsgemäßen Ventilfunktionsgruppe in einer teilweisen, geschnittenen Seitenansicht,
- Figur 6: die Buchsendichtung des zweiten Ausführungsbeispiels in einer perspektivischen Einzeldarstellung analog zur Fig. 2,
- Figur 7: ein drittes Ausführungsbeispiel des erfindungsgemäßen flüssigkeitsführenden Systems mit der erfindungsgemäßen Ventilfunktionsgruppe in einer teilweisen, geschnittenen Seitenansicht,
- Figur 8: das dritte Ausführungsbeispiel in einem Querschnitt im Bereich der Buchsendichtung und
- Figur 9: die Buchsendichtung des dritten Ausführungsbeispiels in einer perspektivischen Einzeldarstellung analog zu den Fig. 2 und 6.

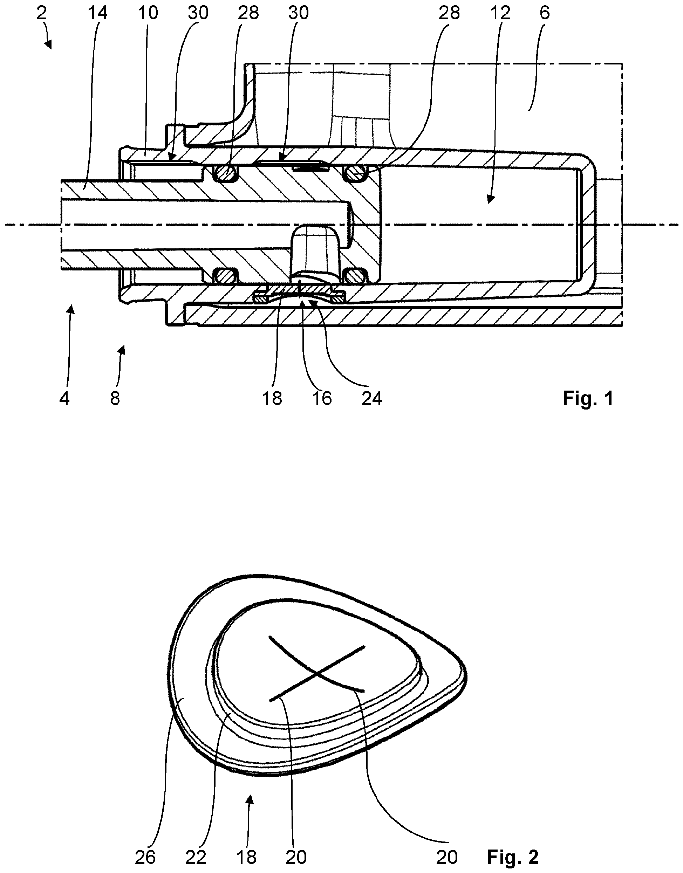

In den Fig. 1 bis 4 ist ein erstes Ausführungsbeispiel des erfindungsgemäßen flüssigkeitsführenden Systems mit der erfindungsgemäßen Ventilfunktionsgruppe rein exemplarisch dargestellt.

Das flüssigkeitsführende System 2 weist ein als eine Waschmaschine für Textilien ausgebildetes Haushaltsgerät 4, einen als eine Waschmittelkartusche mit nicht dargestelltem Waschmittel ausgebildeten Flüssigkeitstank 6 und einer Ventilfunktionsgruppe 8 zur wahlweisen strömungsleitenden Verbindung des Flüssigkeitstanks 6 mit oder strömungsleitenden Trennung des Flüssigkeitstanks 6 von dem Haushaltsgerät 4 auf.

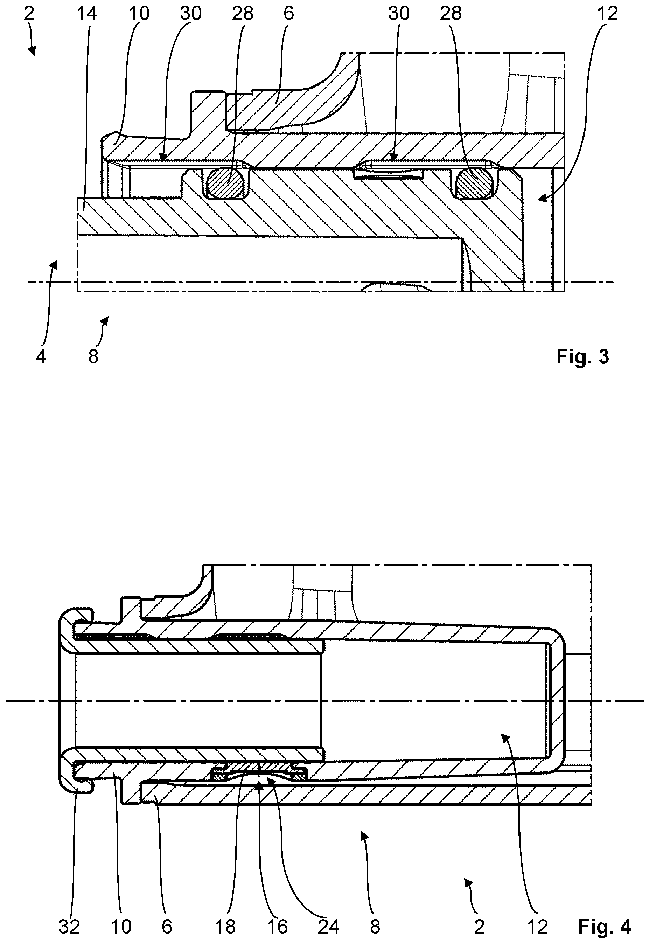

Die Ventilfunktionsgruppe 8 für das flüssigkeitsführende System 2 umfasst eine Kupplungsbuchse 10 zur strömungsleitenden Verbindung der Ventilfunktionsgruppe 8 mit dem Flüssigkeitstank 6 und einen in einer in den Fig. 1 und 3 dargestellten Einstecklage in eine Stutzenaufnahme 12 der Kupplungsbuchse 10 strömungsleitend eingesteckten Kupplungsstutzen 14 zur strömungsleitenden Verbindung der Ventilfunktionsgruppe 8 mit dem Haushaltsgerät 4, wobei die Kupplungsbuchse 10 eine zwischen einer einen den Flüssigkeitstank 6 mit der Stutzenaufnahme 12 strömungsleitend verbindenden Strömungsweg 16 blockierenden Schließlage und einer den Strömungsweg 16 öffnenden Öffnungslage hin und her überführbare Buchsendichtung 18 aufweist und der Strömungsweg 16 lediglich mittels einer elastischen Verformung der Buchsendichtung 18 in deren in den Fig. 1 bis 4 dargestellten Schließlage blockierbar und in deren nicht dargestellten Öffnungslage öffenbar ist.

Bei dem vorliegenden Ausführungsbeispiel des erfindungsgemäßen flüssigkeitsführenden Systems sind der Kupplungsstutzen 14 als ein integraler Bestandteil des Haushaltsgeräts 4 und die Kupplungsbuchse 10 als ein integraler Bestandteil des Flüssigkeitstanks 6 ausgebildet. Sowohl die Kupplungsbuchse 10 wie auch der Kupplungsstutzen 14 sind hier jeweils aus einem Thermoplast hergestellt.

Die Buchsendichtung 18 ist hier als ein Squeeze-Element aus einem Elastomer mit zwei über Kreuz angeordneten Schlitzen 20 ausgebildet. Siehe hierzu die Fig. 2, in der die Buchsendichtung 18 in deren Schließlage dargestellt ist. Ferner ist die Buchsendichtung 18 derart ausgebildet, dass die Buchsendichtung 18 in deren Schließlage und in deren Öffnungslage mit einem Dichtvorsprung 22 in eine Strömungswegöffnung 24 der Kupplungsbuchse 10 dichtend eingreift. Darüber hinaus weist die Buchsendichtung 18 an deren Randbereich einen umlaufenden Verbindungsabschnitt 26 auf, wobei die Buchsendichtung 18 mittels des Verbindungsabschnitts 26 mit der Kupplungsbuchse 10 kraftübertragend verbunden ist. Hierfür bieten sich dem Fachmann eine Vielzahl von Verbindungstechniken an. Rein exemplarisch sei hier lediglich auf Mehrkomponenten-Spritzguss oder Verrasten mittels eines Befestigungsrings oder dergleichen hingewiesen.

Bei dem vorliegenden Ausführungsbeispiel ist die Buchsendichtung 18 derart ausgebildet, dass die Buchsendichtung 18 mittels eines an der Buchsendichtung 18 anliegenden Unterdrucks, nämlich lediglich mittels des Unterdrucks, von deren Schließlage in deren Öffnungslage überführbar ist. Bei der Überführung der Buchsendichtung 18 von deren Schließlage in deren Öffnungslage werden durch die beiden kreuzförmig angeordneten Schlitze 20 gebildete Laschen der Buchsendichtung 18 mittels des anliegenden Unterdrucks aus der in der Fig. 2 dargestellten Lage angehoben, so dass der Strömungsweg 16, nämlich die Strömungswegöffnung 24 der Kupplungsbuchse 10, geöffnet ist. Sobald der Unterdruck an der Buchsendichtung 18 nicht mehr anliegt, kehren die vorgenannten Laschen wieder in die aus der Fig. 2 ersichtliche Lage zurück, so dass sich die Buchsendichtung 18 wieder in deren Schließlage befindet. Der Strömungsweg 16 ist erneut blockiert.

Um den vorgenannten Unterdruck zu erzeugen, sind zwei umlaufende Stutzendichtungen 28 derart auf die Stutzenaufnahme 12 angepasst ausgebildet und an dem Kupplungsstutzen 14 angeordnet, dass mittels des Kupplungsstutzens 14 in dessen Einstecklage in der Stutzenaufnahme 12 ein Unterdruck derart aufbaubar ist, dass mittels dieses Unterdrucks die Buchsendichtung 18 in deren Öffnungslage überführbar ist.

Ferner sind zusätzlich zu den zwei umlaufenden Stutzendichtungen 28 zur Abdichtung der Stutzenaufnahme 12 in einem Bereich zwischen den beiden Stutzendichtungen 28 bei in dessen Einstecklage befindlichem Kupplungsstutzen 14 an der Kupplungsbuchse 10 zwei umlaufende Belüftungsnuten 30 angeordnet, wobei die Stutzendichtungen 28 und die Belüftungsnuten 30 derart zueinander korrespondierend ausgebildet und angeordnet sind, dass ein zwischen der Kupplungsbuchse 10 und dem Kupplungsstutzen 14 wirkender Unterdruck bei der Überführung des Kupplungsstutzens 14 in eine Nicht-Einstecklage des Kupplungsstutzens 14, in der der Kupplungsstutzen 14 in die Stutzenaufnahme 12 nicht eingesteckt ist, abbaubar ist.

Darüber hinaus umfasst die Ventilfunktionsgruppe 8 des vorliegenden Ausführungsbeispiels zusätzlich einen Transportstutzen 32 aus Thermoplast, wobei der Transportstutzen 32 derart auf die Stutzenaufnahme 12 der Kupplungsbuchse 10 mit der daran angeordneten Buchsendichtung 18 angepasst ausgebildet ist, dass die Buchsendichtung 18 bei in die Stutzenaufnahme 12 eingesteckten Transportstutzen 32 in deren Schließlage sicherbar ist. Siehe hierzu die Fig. 4, in der der Transportstutzen 32 in einer Einstecklage des Transportstutzens 32 dargestellt ist, in der der Transportstutzen 32, analog zu dem Kupplungsstutzen 14, in die Stutzenaufnahme 12 eingesteckt ist.

Nachfolgend wird die Funktionsweise des erfindungsgemäßen flüssigkeitsführenden Systems mit der erfindungsgemäßen Ventilfunktionsgruppe gemäß dem ersten Ausführungsbeispiel anhand der Fig. 1 bis 4 näher erläutert.

Zunächst befindet sich der Kupplungsstutzen 14 in dessen Nicht-Einstecklage. Der Flüssigkeitstank 6 mit der daran angeordneten Kupplungsbuchse 10 ist also noch nicht mit dem Haushaltsgerät 4 mit dem daran angeordneten Kupplungsstutzen 14 strömungsleitend verbunden. Zur Sicherung der Buchsendichtung 18 in deren Schließlage ist in die Stutzenaufnahme 12 der Kupplungsbuchse 10 der Transportstutzen 32 eingesteckt. Eine Verformung der Buchsendichtung 18 in Richtung von deren Öffnungslage, beispielsweise aufgrund eines in dem Flüssigkeitstank 6 herrschenden Überdrucks, ist mittels des Transportstutzens 32 wirksam verhindert. Siehe hierzu die Fig. 4.

Zwecks strömungsleitender Verbindung des Flüssigkeitstanks 6 mit dem Haushaltsgerät 4 des flüssigkeitsführenden Systems 2 entfernt ein nicht dargestellter Benutzer des flüssigkeitsführenden Systems 2 zunächst den Transportstutzen 32, in dem der Benutzer den Transportstutzen 32 in der Bildebene der Fig. 4 von rechts nach links aus der Stutzenaufnahme 12 der Kupplungsbuchse 10 herauszieht. Die Buchsendichtung 18 wird dadurch jedoch nicht geöffnet, also in deren Öffnungslage überführt, sondern verbleibt in deren in der Fig. 2 dargestellten Schließlage.

Der Benutzer steckt den Flüssigkeitstank 6 nun mittels der Kupplungsbuchse 10 auf den Kupplungsstutzen 14 des Haushaltsgeräts 4 auf, so dass der Kupplungsstutzen 14 in dessen in den Fig. 1 und 3 dargestellte Einstecklage überführt wird. In der Einstecklage des Kupplungsstutzens 14 liegt dieser mittels der Stutzendichtungen 28 dicht an der Stutzenaufnahme 12 der Kupplungsbuchse 10 an. Wie aus den Fig. 1 und 3 ferner hervorgeht, ist die Buchsendichtung 18 in einem Bereich der Kupplungsbuchse 10 angeordnet, in dem die Stutzenaufnahme 12 mittels der Stutzendichtungen 28 gegenüber einem Rest der Stutzenaufnahme 12 abgedichtet ist. Die Buchsendichtung 18 verbleibt nach wie vor in deren in der Fig. 2 dargestellten Schließlage.

Anschließend schaltet der Benutzer das als Waschmaschine für Textilien ausgebildete Haushaltsgerät 4 an, um nicht dargestellte Textilien zu waschen. Hierfür stellt der Benutzer an dem Haushaltsgerät 4 ein Automatikprogramm auf dem Fachmann bekannte Art und Weise an, so dass eine nicht dargestellte Pumpe des Haushaltsgeräts eingeschaltet wird. Mittels der Pumpe und dem Kupplungsstutzen 14 wird an der Buchsendichtung 18 ein Unterdruck erzeugt, so dass die Buchsendichtung 18 mittels des Unterdrucks auf die oben erläuterte Art und Weise von deren Schließlage in deren Öffnungslage überführt wird. Das in dem Flüssigkeitstank 6 bevorratete Waschmittel kann nun mittels des geöffneten Strömungswegs 16 von dem Flüssigkeitstank 6 durch den Kupplungsstutzen 14 in das Haushaltsgerät 4 einströmen. Der für eine Überführung der Buchsendichtung 18 in deren Öffnungslage erforderliche Unterdruck ist beispielsweise durch die Materialstärke und die Geometrie der Buchsendichtung 18 einstellbar.

Wird die vorgenannte Pumpe des Haushaltsgeräts 4 wieder ausgeschaltet, so wird auch der an der Buchsendichtung 18 anliegende Unterdruck wieder abgebaut, so dass die Buchsendichtung 18 wieder automatisch in deren Schließlage überführt wird.

Möchte der Benutzer den Flüssigkeitstank 6 wieder von dem Haushaltsgerät 4 entnehmen, so überführt er den Kupplungsstutzen 14 von dessen Einstecklage in dessen Nicht-Einstecklage. Bei der Überführung des Kupplungsstutzens 14 in dessen Nicht-Einstecklage entsteht aufgrund der Stutzendichtungen 28 in dem in der Bildebene der Fig. 1 rechts dargestellten Teil der Stutzenaufnahme 12 ebenfalls ein Unterdruck. Dieser ungewünschte Unterdruck wird jedoch dadurch gebrochen, dass in der Kupplungsbuchse 10 die zu den Stutzendichtungen 28 korrespondierenden Belüftungsnuten 30 angeordnet sind. Sobald der Benutzer den Kupplungsstutzen 14 in der Bildebene der Fig. 1 ein wenig von rechts nach links bewegt hat, gelangen die Stutzendichtungen 28 in Eingriff mit der jeweiligen Belüftungsnut 30, so dass der in dem vorgenannten Teil der Stutzenaufnahme 12 herrschende Unterdruck ausgeglichen wird. Der Benutzer kann den Kupplungsstutzen 14 nun sehr leicht aus der Stutzenaufnahme 12 entfernen, so dass der Flüssigkeitstank 6 von dem Benutzer leicht von dem Haushaltsgerät 4 getrennt werden kann. Die Stutzendichtungen 28 und die Belüftungsnuten 30 sind hier derart aufeinander abgestimmt dimensioniert und angeordnet, dass bei der Überführung des Kupplungsstutzens 14 in dessen Nicht-Einstecklage eine ungewünschte Überführung der Buchsendichtung 18 in deren Öffnungslage aufgrund des vorgenannten Unterdrucks sicher verhindert ist.

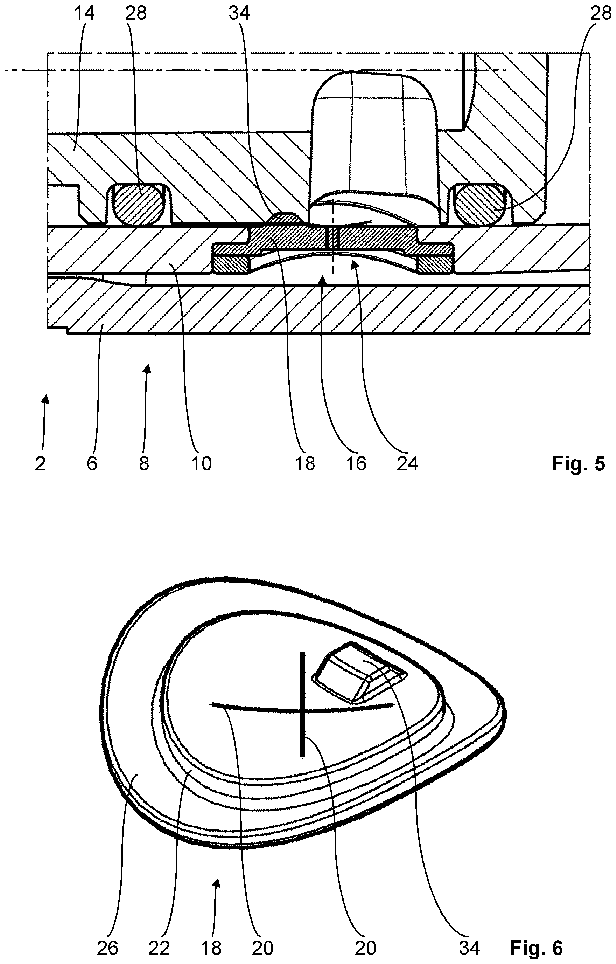

In den Fig. 5 bis 9 sind zwei weitere Ausführungsbeispiele des erfindungsgemäßen flüssigkeitsführenden Systems mit der erfindungsgemäßen Ventilfunktionsgruppe beispielhaft erläutert. Gleiche oder gleichwirkende Bauteile sind mit den gleichen Bezugszeichen versehen. Ferner werden die weiteren Ausführungsbeispiele jeweils lediglich in dem Umfang erläutert, in dem diese von den vorhergehenden Ausführungsbeispielen, insbesondere von dem ersten Ausführungsbeispiel, abweichen. Ansonsten wird auf die Ausführungen zu den jeweils vorgenannten Ausführungsbeispielen, insbesondere auf die obigen Ausführungen zu dem ersten Ausführungsbeispiel, verwiesen.

In den Fig. 5 und 6 ist ein zweites Ausführungsbeispiel erläutert. Das zweite Ausführungsbeispiel entspricht im Wesentlichen dem ersten Ausführungsbeispiel, so dass diesbezüglich weitgehend auf die obigen Ausführungen zu dem ersten Ausführungsbeispiel verwiesen werden kann. Im Unterschied zu dem ersten Ausführungsbeispiel weist die Buchsendichtung 18 des zweiten Ausführungsbeispiels einen Betätigungsvorsprung 34 auf, wobei der Betätigungsvorsprung 34 derart ausgebildet ist, dass die Buchsendichtung 18 bei der Überführung des Kupplungsstutzens 14 in dessen Einstecklage mittels des Betätigungsvorsprungs 34 elastisch verformbar ist. Der Kupplungsstutzen 14 wirkt also bei dessen Überführung in dessen Einstecklage und in dessen Einstecklage mit einer Kraft mechanisch auf die Buchsendichtung 18, nämlich auf deren Betätigungsvorsprung 34, ein. Der Kupplungsstutzen 14 drückt dabei die Buchsendichtung 18 mittels des Betätigungsvorsprungs 34 derart in der jeweiligen Bildebene der Fig. 5 und 6 nach unten, dass der für die Überführung der Buchsendichtung 18 in deren Öffnungslage erforderliche Unterdruck im Vergleich zu dem ersten Ausführungsbeispiel wesentlich verringert ist. Die Buchsendichtung 18 ist somit derart ausgebildet, dass die Buchsendichtung 18 zusätzlich mittels einer mechanischen Krafteinwirkung des Kupplungsstutzens 14 auf die Buchsendichtung 18 bei dessen Überführung in dessen Einstecklage, von deren Schließlage in deren Öffnungslage überführbar ist. Obwohl der für eine Überführung der Buchsendichtung 18 in deren Öffnungslage erforderliche Unterdruck bei in der Einstecklage befindlichem Kupplungsstutzen 14 auf diese Weise vorteilhaft gesenkt ist, bleibt der für die Überführung der Buchsendichtung 18 in deren Öffnungslage erforderliche Unterdruck bei in der Nicht-Einstecklage befindlichem Kupplungsstutzen 14 in gewünschter Weise von der oben genannten Modifikation der Buchsendichtung 18, nämlich von der Anordnung des Betätigungsvorsprungs 34 an der Buchsendichtung 18, unbeeinflusst.

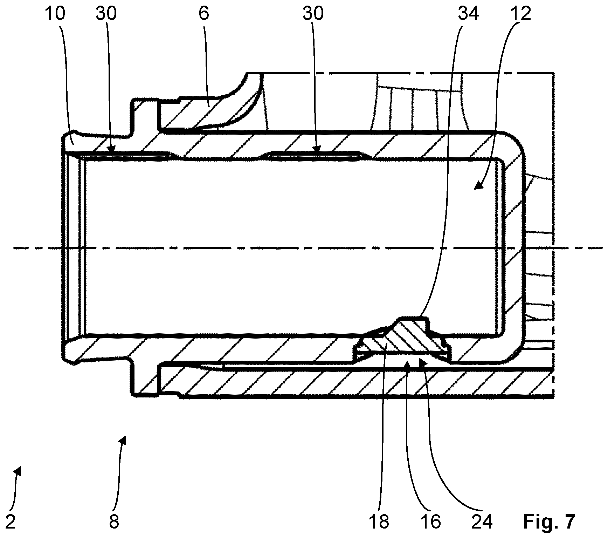

In den Fig. 7 bis 9 ist ein drittes Ausführungsbeispiel erläutert. Das dritte Ausführungsbeispiel unterscheidet sich von dem ersten und dem zweiten Ausführungsbeispiel unter anderem in dessen prinzipieller Funktionsweise, was nachfolgend näher erläutert wird.

Die Buchsendichtung 18 dieses Ausführungsbeispiels ist derart ausgebildet, dass die Buchsendichtung 18 lediglich mittels einer mechanischen Krafteinwirkung des Kupplungsstutzens 14 auf die Buchsendichtung 18 bei dessen Überführung in dessen Einstecklage von deren Schließlage in deren Öffnungslage überführbar ist. Anders als bei dem zweiten Ausführungsbeispiel wird die Buchsendichtung 18 also nicht durch eine kombinierte Wirkung, nämlich der mechanischen Krafteinwirkung einerseits und des an der Buchsendichtung 18 anliegenden Unterdrucks andererseits, von deren Schließlage in deren Öffnungslage überführt. Stattdessen erfolgt die Überführung der Buchsendichtung 18 von deren Schließlage in deren Öffnungslage ausschließlich durch die mechanische Krafteinwirkung des Kupplungsstutzens 14 auf die Buchsendichtung 18, nämlich den Betätigungsvorsprung 34. Hierfür ist der Betätigungsvorsprung 34 entsprechend groß dimensioniert.

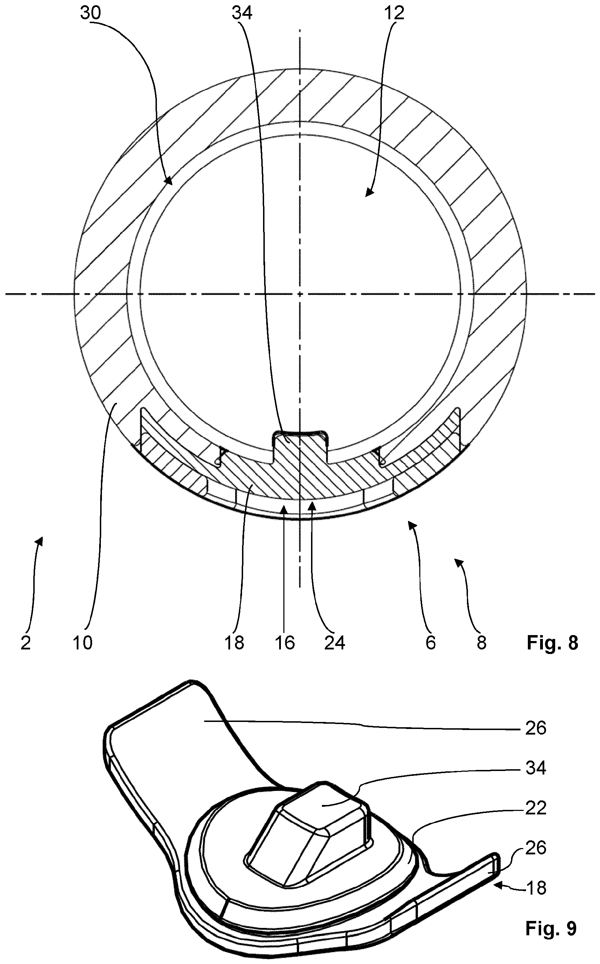

Wie aus der Fig. 9 ersichtlich ist, weist die Buchsendichtung 18 des dritten Ausführungsbeispiels keine kreuzförmig angeordneten Schlitze auf. Ferner weist die Buchsendichtung 18 des vorliegenden Ausführungsbeispiels an deren Randbereich anstelle des umlaufenden Verbindungsabschnitts zwei einander diametral gegenüberliegend angeordnete Verbindungsabschnitte 26 auf, wobei die Buchsendichtung 18 mittels der beiden Verbindungsabschnitte 26 mit der Kupplungsbuchse 10 kraftübertragend verbunden ist. Darüber hinaus ist die Buchsendichtung 18 hier derart ausgebildet, dass die Buchsendichtung 18 in deren Schließlage mit deren Dichtvorsprung 22 in die Strömungswegöffnung 24 der Kupplungsbuchse 10 dichtend eingreift und der Dichtvorsprung 22 in der Öffnungslage der Buchsendichtung 18 von der Strömungswegöffnung 24 strömungsleitend abgehoben ist. In den Fig. 7 und 8 ist die Buchsendichtung 18 des dritten Ausführungsbeispiels jeweils in deren Schließlage dargestellt. Sobald der Kupplungsstutzen 14, analog zu dem ersten und dem zweiten Ausführungsbeispiel, in dessen Einstecklage überführt worden ist, drückt der Kupplungsstutzen 14 die Buchsendichtung 18 mittels des Betätigungsvorsprungs 34 in der jeweiligen Bildebene der Fig. 7 und 8 derart weit nach unten, dass sich der Dichtvorsprung 22 der Buchsendichtung 18 nach unten aus seiner in den Fig. 7 und 8 dargestellten Lage in eine die Strömungswegöffnung 24 nicht mehr abdichtende Lage bewegt. Die Buchsendichtung 18 befindet sich in deren in den Fig. 7 und 8 nicht dargestellten Öffnungslage. Wird der Kupplungsstutzen 14 von dessen Einstecklage in dessen Nicht-Einstecklage überführt, dann federt die elastische Buchsendichtung 18 von deren Öffnungslage wieder zurück in deren Schließlage. Hierbei wirken insbesondere die beiden Verbindungsabschnitte 26 der Buchsendichtung 18 rückstellend. Jedoch ist es auch denkbar, dass der bei der Überführung des Kupplungsstutzens 14 in dessen Nicht-Einstecklage in der Stutzenaufnahme 12 wirkende Unterdruck gezielt zusätzlich für die Überführung der Buchsendichtung 18 von deren Öffnungslage in deren Schließlage genutzt wird. Beispielsweise können die obigen Belüftungsnuten dafür modifiziert werden oder bei einer alternativen Ausführungsform zu dem vorliegenden dritten Ausführungsbeispiel ganz entfallen.

Die Erfindung ist nicht auf die vorliegenden Ausführungsbeispiele beschränkt. Siehe hierzu beispielsweise die diesbezüglichen Ausführungen in der Beschreibungseinleitung.

Insbesondere ist die Erfindung nicht auf die konstruktiven und fertigungstechnischen Details der drei erläuterten Ausführungsbeispiele begrenzt.

## Patentansprüche

1. Ventilfunktionsgruppe (8) für ein flüssigkeitsführendes System (2) mit einem Haushaltsgerät (4) und einem Flüssigkeitstank (6) zur wahlweisen strömungsleitenden Verbindung des Flüssigkeitstanks (6) mit oder strömungsleitenden Trennung des Flüssigkeitstanks (6) von dem Haushaltsgerät (4), umfassend eine Kupplungsbuchse (10) zur strömungsleitenden Verbindung der Ventilfunktionsgruppe (8) mit dem Flüssigkeitstank (6) und einen in einer Einstecklage in eine Stutzenaufnahme (12) der Kupplungsbuchse (10) strömungsleitend eingesteckten Kupplungsstutzen (14) zur strömungsleitenden Verbindung der Ventilfunktionsgruppe (8) mit dem Haushaltsgerät (4), wobei die Kupplungsbuchse (10) eine zwischen einer einen den Flüssigkeitstank (6) mit der Stutzenaufnahme (12) strömungsleitend verbindenden Strömungsweg (16) blockierenden Schließlage und einer den Strömungsweg (16) öffnenden Öffnungslage hin und her überführbare Buchsendichtung (18) aufweist und der Strömungsweg (16) lediglich mittels einer elastischen Verformung der Buchsendichtung (18) in deren Schließlage blockierbar und in deren Öffnungslage öffenbar ist,
**dadurch gekennzeichnet,**
**dass** die Buchsendichtung (18) derart ausgebildet ist, dass die Buchsendichtung (18) in der Einstecklage mittels eines an der Buchsendichtung (18) anliegenden Unterdrucks, bevorzugt lediglich mittels eines Unterdrucks, von deren Schließlage in deren Öffnungslage und/oder von deren Öffnungslage in deren Schließlage überführbar ist.

2. Ventilfunktionsgruppe (8) nach Anspruch 1, **dadurch gekennzeichnet, dass** die Buchsendichtung (18) derart ausgebildet ist, dass die Buchsendichtung (18) mittels einer mechanischen Krafteinwirkung des Kupplungsstutzens (14) auf die Buchsendichtung (18) bei dessen Überführung in dessen Einstecklage, bevorzugt lediglich mittels der vorgenannten Krafteinwirkung, von deren Schließlage in deren Öffnungslage überführbar ist.

3. Ventilfunktionsgruppe (8) nach Anspruch 2, **dadurch gekennzeichnet, dass** die Buchsendichtung (18) einen Betätigungsvorsprung (34) aufweist, wobei der Betätigungsvorsprung (34) derart ausgebildet ist, dass die Buchsendichtung (18) bei der Überführung des Kupplungsstutzens (14) in dessen Einstecklage mittels des Betätigungsvorsprungs (34), bevorzugt lediglich mittels des Betätigungsvorsprungs (34), elastisch verformbar ist.

4. Ventilfunktionsgruppe (8) nach einem der Ansprüche 1 bis 3, **dadurch gekennzeichnet, dass** die Buchsendichtung (18) als ein Squeeze-Element mit mindestens einem Schlitz (20) ausgebildet ist.

5. Ventilfunktionsgruppe (8) nach einem der Ansprüche 1 bis 4, **dadurch gekennzeichnet, dass** die Buchsendichtung (18) derart ausgebildet ist, dass die Buchsendichtung (18) in deren Schließlage mit einem Dichtvorsprung (22) in eine Strömungswegöffnung (24) der Kupplungsbuchse (10) dichtend eingreift, bevorzugt, dass der Dichtvorsprung (22) bei der Überführung der Buchsendichtung (18) in deren Öffnungslage zumindest teilweise von der Strömungswegöffnung (24) strömungsleitend abhebbar ist.

6. Ventilfunktionsgruppe (8) nach einem der Ansprüche 1 bis 5, **dadurch gekennzeichnet, dass** die Buchsendichtung (18) an deren Randbereich einen umlaufenden Verbindungsabschnitt (26) oder mindestens zwei einander diametral gegenüberliegend angeordnete Verbindungsabschnitte (26) aufweist, wobei die Buchsendichtung (18) mittels des mindestens einen Verbindungsabschnitts (26) mit der Kupplungsbuchse (10) kraftübertragend verbunden ist.

7. Ventilfunktionsgruppe (8) nach Anspruch 1, **dadurch gekennzeichnet, dass** zwei umlaufende Stutzendichtungen (28) derart auf die Stutzenaufnahme (12) angepasst ausgebildet und an dem Kupplungsstutzen (14) angeordnet sind, dass mittels des Kupplungsstutzens (14) in dessen Einstecklage in der Stutzenaufnahme (12) ein Unterdruck derart aufbaubar ist, dass mittels dieses Unterdrucks die Buchsendichtung (18) in deren Öffnungslage überführbar ist.

8. Ventilfunktionsgruppe (8) nach einem der Ansprüche 1 bis 7, **dadurch gekennzeichnet, dass** an dem Kupplungsstutzen (14) zwei umlaufende Stutzendichtungen (28) zur Abdichtung der Stutzenaufnahme (12) in einem Bereich zwischen den beiden Stutzendichtungen (28) bei in dessen Einstecklage befindlichem Kupplungsstutzen (14) und an der Kupplungsbuchse (10) zwei umlaufende Belüftungsnuten (30) angeordnet sind, wobei die Stutzendichtungen (28) und die Belüftungsnuten (30) derart zueinander korrespondierend ausgebildet und angeordnet sind, dass ein zwischen der Kupplungsbuchse (10) und dem Kupplungsstutzen (14) wirkender Unterdruck bei der Überführung des Kupplungsstutzens (14) in eine Nicht-Einstecklage des Kupplungsstutzens (14), in der der Kupplungsstutzen (14) in die Stutzenaufnahme (12) nicht eingesteckt ist, abbaubar ist.

9. Ventilfunktionsgruppe (8) nach einem der Ansprüche 1 bis 8, **dadurch gekennzeichnet, dass** die Ventilfunktionsgruppe (8) zusätzlich einen Transportstutzen (32) umfasst, wobei der Transportstutzen (32) derart auf die Stutzenaufnahme (12) der Kupplungsbuchse (10) mit der daran angeordneten Buchsendichtung (18) angepasst ausgebildet ist, dass die Buchsendichtung (18) bei in die Stutzenaufnahme (12) eingesteckten Transportstutzen (32) in deren Schließlage sicherbar ist.

10. Flüssigkeitsführendes System (2) mit einem Haushaltsgerät (4), einem Flüssigkeitstank (6) und einer Ventilfunktionsgruppe (8) zur wahlweisen strömungsleitenden Verbindung des Flüssigkeitstanks (6) mit oder strömungsleitenden Trennung des Flüssigkeitstanks (6) von dem Haushaltsgerät (4), **dadurch gekennzeichnet, dass** die Ventilfunktionsgruppe (8) nach einem der Ansprüche 1 bis 9 ausgebildet ist.

11. Flüssigkeitsführendes System (2) nach Anspruch 10, **dadurch gekennzeichnet, dass** der Kupplungsstutzen (14) als ein integraler Bestandteil des Haushaltsgeräts (4) und die Kupplungsbuchse (10) als ein integraler Bestandteil des Flüssigkeitstanks (6) ausgebildet sind.

## Claims

1. Valve function group (8) for a liquid-conducting system (2) comprising a domestic appliance (4) and a liquid tank (6) for selective flow-conducting connection of the liquid tank (6) to or flow-conducting separation of the liquid tank (6) from the domestic appliance (4), comprising a coupling socket (10) for the flow-conducting connection of the valve function group (8) to the liquid tank (6), and a coupling connecting piece (14) inserted in an insertion position into a connecting-piece holder (12) of the coupling socket (10) in a flow-conducting manner for the flow-conducting connection of the valve function group (8) to the domestic appliance (4), the coupling socket (10) having a bush seal (18) which is transferable back and forth between a closed position blocking a flow path (16) connecting the liquid tank (6) to the connecting-piece holder (12) in a flow-conducting manner and an open position opening the flow path (16), and the flow path (16) is blockable in its closed position and openable in its open position only by means of an elastic deformation of the bush seal (18),
**characterised in that**
the bush seal (18) is designed such that the bush seal (18) is transferable in the insertion position from its closing position into its open position and/or from its open position into its closed position by means of a vacuum applied to the bush seal (18), preferably only by means of a vacuum.

2. Valve function group (8) according to claim 1, **characterised in that** the bush seal (18) is designed such that the bush seal (18) is transferable from its closing position into its open position by means of a mechanical force exerted by the coupling connecting piece (14) on the bush seal (18) during the transfer of the coupling connecting piece into its insertion position, preferably only by means of the aforementioned force exertion.

3. Valve function group (8) according to claim 2, **characterised in that** the bush seal (18) has an actuating projection (34), the actuating projection (34) being designed such that the bush seal (18) is elastically deformable by means of the actuating projection (34), preferably only by means of the actuating projection (34), during the transfer of the coupling connecting piece (14) into its insertion position.

4. Valve function group (8) according to any of claims 1 to 3,
**characterised in that** the bush seal (18) is designed as a squeeze element having at least one slot (20).

5. Valve function group (8) according to any of claims 1 to 4,
**characterised in that** the bush seal (18) is designed in such a way that, in its closed position, the bush seal (18) engages sealingly with a sealing projection (22) in a flow path opening (24) of the coupling socket (10), preferably **in that** the sealing projection (22) is raisable at least in part from the flow path opening (24) in a flow-conducting manner during the transfer of the bush seal (18) into its opening position.

6. Valve function group (8) according to any of claims 1 to 5,
**characterised in that** the bush seal (18) has a circumferential connecting portion (26) or at least two diametrically opposite connecting portions (26) on the edge region thereof, the bush seal (18) being connected to the coupling socket (10) in a force-transmitting manner by means of the at least one connecting portion (26).

7. Valve function group (8) according to claim 1, **characterised in that** two circumferential connecting-piece seals (28) are designed to be adapted to the connecting-piece holder (12) and are arranged on the coupling connecting piece (14) in such a way that, by means of the coupling connecting piece (14), a vacuum can be built up in the connecting-piece holder (12) in the insertion position thereof such that the bush seal (18) is transferable into its open position by means of this vacuum.

8. Valve function group (8) according to any of claims 1 to 7,
**characterised in that** two circumferential connecting piece seals (28) are arranged on the coupling connecting piece (14) for sealing the connecting-piece holder (12) in a region between the two connecting piece seals (28) when the coupling connecting piece (14) is located in the insertion position thereof and two circumferential ventilation grooves (30) are arranged on the coupling socket (10), the connecting piece seals (28) and the ventilation grooves (30) being designed and arranged to correspond to one another in such a way that a vacuum acting between the coupling socket (10) and the coupling connecting piece (14) can be reduced during the transfer of the coupling connecting piece (14) into a non-insertion position of the coupling connecting piece (14), in which the coupling connecting piece (14) is not inserted into the connecting-piece holder (12).

9. Valve function group (8) according to any of claims 1 to 8,
**characterised in that** the valve functional group (8) additionally comprises a transport connecting piece (32), the transport connecting piece (32) being designed to be adapted to the connecting-piece holder (12) of the coupling socket (10) with the bush seal (18) arranged thereon in such a way that the bush seal (18) is securable in its closed position when the transport connecting piece (32) is inserted into the connecting-piece holder (12).

10. Liquid-conducting system (2) comprising a domestic appliance (4), a liquid tank (6) and a valve function group (8) for selective flow-conducting connection of the liquid tank (6) to or flow-conducting separation of the liquid tank (6) from the domestic appliance (4), **characterised in that** the valve function group (8) is designed according to any of claims 1 to 9.

11. Liquid-conducting system (2) according to claim 10, **characterised in that** the coupling connecting piece (14) is designed as an integral part of the domestic appliance (4) and the coupling socket (10) is designed as an integral part of the liquid tank (6).

## Revendications

1. Groupe fonctionnel de soupape (8) destiné à un système de transport de liquide (2) comportant un appareil électroménager (4) et un réservoir de liquide (6) pour, au choix, le raccordement d'une manière conductrice d'écoulement du réservoir de liquide (6) à l'appareil électroménager (4) ou la séparation d'une manière conductrice d'écoulement du réservoir de liquide (6) dudit appareil électroménager, comprenant une douille d'accouplement (10) pour le raccordement d'une manière conductrice d'écoulement du groupe fonctionnel de soupape (8) au réservoir de liquide (6) et une tubulure d'accouplement (14) insérée de manière conductrice d'écoulement dans une position d'insertion dans un logement pour tubulure (12) de la douille d'accouplement (10) pour le raccordement d'une manière conductrice d'écoulement du groupe fonctionnel de soupape (8) à l'appareil électroménager (4), dans lequel la douille d'accouplement (10) présente un joint de douille (18) pouvant être transféré en va-et-vient entre une position de fermeture bloquant une voie d'écoulement (16) raccordant de manière conductrice d'écoulement le réservoir de liquide (6) au logement pour tubulure (12) et une position d'ouverture ouvrant la voie d'écoulement (16), et la voie d'écoulement (16) peut être bloquée dans la position de fermeture dudit joint de douille et être ouverte dans la position d'ouverture dudit joint de douille uniquement au moyen d'une déformation élastique du joint de douille (18),
**caractérisé en ce que**
le joint de douille (18) est réalisé de telle sorte que le joint de douille (18) peut être transféré, dans la position d'insertion, au moyen d'une dépression appliquée sur le joint de douille (18), de préférence uniquement au moyen d'une dépression, de sa position de fermeture vers sa position d'ouverture et/ou de sa position d'ouverture vers sa position de fermeture.

2. Groupe fonctionnel de soupape (8) selon la revendication 1,
**caractérisé en ce que** le joint de douille (18) est réalisé de telle sorte que le joint de douille (18) peut être transféré de sa position de fermeture vers sa position d'ouverture au moyen d'un effet de force mécanique de la tubulure d'accouplement (14) sur le joint de douille (18) lors du transfert de ladite tubulure d'accouplement dans sa position d'insertion, de préférence uniquement au moyen de l'effet de force précité.

3. Groupe fonctionnel de soupape (8) selon la revendication 2,
**caractérisé en ce que** le joint de douille (18) présente une saillie d'actionnement (34), dans lequel la saillie d'actionnement (34) est réalisée de telle sorte que le joint de douille (18) peut être déformé élastiquement au moyen de la saillie d'actionnement (34), de préférence uniquement au moyen de la saillie d'actionnement (34), lors du transfert de la tubulure d'accouplement (14) dans sa position d'insertion.

4. Groupe fonctionnel de soupape (8) selon l'une des revendications 1 à 3,
**caractérisé en ce que** le joint de douille (18) est réalisé sous la forme d'un élément de compression comportant au moins une fente (20).

5. Groupe fonctionnel de soupape (8) selon l'une des revendications 1 à 4,
**caractérisé en ce que** le joint de douille (18) est réalisé de telle sorte que le joint de douille (18), dans sa position de fermeture, vient en prise de manière étanche avec une saillie d'étanchéité (22) dans une ouverture de voie d'écoulement (24) de la douille d'accouplement (10), de préférence de telle sorte que la saillie d'étanchéité (22), lors du transfert du joint de douille (18) vers sa position d'ouverture, peut être soulevée de manière conductrice d'écoulement et au moins partiellement de l'ouverture de voie d'écoulement (24).

6. Groupe fonctionnel de soupape (8) selon l'une des revendications 1 à 5,
**caractérisé en ce que** le joint de douille (18) présente, sur sa zone de bord, une section de liaison (26) circonférentielle ou au moins deux sections de liaison (26) disposées de manière diamétralement opposée l'une à l'autre, dans lequel le joint de douille (18) est relié de manière conductrice de force à la douille d'accouplement (10) au moyen de l'au moins une section de liaison (26).

7. Groupe fonctionnel de soupape (8) selon la revendication 1,
**caractérisé en ce que** deux joints de tubulure (28) circonférentiels sont réalisés de manière à être adaptés au logement pour tubulure (12) et sont disposés sur la tubulure d'accouplement (14) de telle sorte qu'une dépression peut être établie, au moyen de la tubulure d'accouplement (14) dans sa position d'insertion, dans le logement pour tubulure (12) de telle sorte que le joint de douille (18) peut être transféré vers sa position d'ouverture au moyen de ladite dépression.

8. Groupe fonctionnel de soupape (8) selon l'une des revendications 1 à 7,
**caractérisé en ce que** deux joints de tubulure (28) circonférentiels sont disposés sur la tubulure d'accouplement (14) pour la réalisation de l'étanchéité du logement pour tubulure (12) dans une zone située entre les deux joints de tubulure (28) lorsque la tubulure d'accouplement (14) se trouve dans sa position d'insertion, et deux rainures d'aération (30) circonférentielles sont disposées sur la douille d'accouplement (10), dans lequel les joints de tubulure (28) et les rainures d'aération (30) sont réalisés et disposés de manière à correspondre les uns aux autres de telle sorte qu'une dépression agissant entre la douille d'accouplement (10) et la tubulure d'accouplement (14) peut être dissipée lors du transfert de la tubulure d'accouplement (14) dans une position de non-insertion de la tubulure d'accouplement (14), dans laquelle la tubulure d'accouplement (14) n'est pas insérée dans le logement pour tubulure (12).

9. Groupe fonctionnel de soupape (8) selon l'une des revendications 1 à 8,
**caractérisé en ce que** le groupe fonctionnel de soupape (8) comprend en outre une tubulure de transport (32), dans lequel la tubulure de transport (32) est réalisée de manière à être adaptée au logement pour tubulure (12) de la douille d'accouplement (10) comportant le joint de douille (18) disposé sur celle-ci, de telle sorte que le joint de douille (18) peut être immobilisé dans sa position de fermeture lorsque la tubulure de transport (32) est insérée dans le logement pour tubulure (12).

10. Système de transport de liquide (2) comportant un appareil électroménager (4), un réservoir de liquide (6) et un groupe fonctionnel de soupape (8) pour, au choix, le raccordement d'une manière conductrice d'écoulement du réservoir de liquide (6) à l'appareil électroménager (4) ou la séparation d'une manière conductrice d'écoulement du réservoir de liquide (6) dudit appareil électroménager, **caractérisé en ce que** le groupe fonctionnel de soupape (8) est réalisé selon l'une des revendications 1 à 9.

11. Système de transport de liquide (2) selon la revendication 10,
**caractérisé en ce que** la tubulure d'accouplement (14) est réalisée en tant que partie intégrante de l'appareil électroménager (4) et la douille d'accouplement (10) est réalisée en tant que partie intégrante du réservoir de liquide (6).
